# EUROPEAN PATENT APPLICATION

(11) **EP 4 194 513 A1**
(43) Date of publication of application: **14.06.2023**
(21) Application number: 21853896.5
(22) Date of filing: 30.07.2021
(51) Int. Cl.: C08L 101/00, C08K 5/06, C08K 5/17, C08L 63/00, C08L 75/04

(54) **COMPOSITION, RESIN COMPOSITION, AND MOLDED BODY INCLUDING THESE**

(30) Priority: 07.08.2020 JP 2020134424
(71) Applicant: Kuraray Co., Ltd., Kurashiki-shi, Okayama 710-0801 (JP)
(72) Inventor: NISHIJIMA, Yuki, Tainai-shi, Niigata 959-2691 (JP); NOGUCHI, Daiki, Kurashiki-shi, Okayama 710-0801 (JP); FUKUMOTO, Takashi, Tainai-shi, Niigata 959-2691 (JP)
(74) Representative: D Young & Co LLP
(86) International application number: PCT/JP2021/028222
(87) International publication number: WO 2022/030368

(57) **Abstract**

A composition containing a compound (A) containing a structure represented by the following general formula (I) as a first component, at least one of an antioxidant (B1) different from a phosphorus-based antioxidant and a light stabilizer (B2) as a second component, and a resin component (C) as a third component: 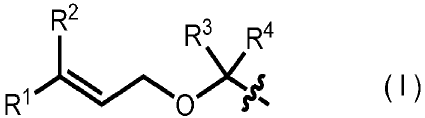 wherein R¹ and R² each independently represent an alkyl group having 1 to 6 carbon atoms, an alkenyl group having 2 to 6 carbon atoms, an aryl group, or an aralkyl group; and R³ and R⁴ each independently represent a hydrogen atom, an alkyl group having 1 to 6 carbon atoms, an alkenyl group having 2 to 6 carbon atoms, an aryl group, or an aralkyl group.

## Description

### Technical Field

The present invention relates to a composition containing a specific unsaturated double bond-containing compound, a resin composition, and a molded body containing the same.

### Background Art

Resins are widely used in various fields as, for example, films, coating materials, fibers, various molded bodies. It is commonly known that a molded body made of a resin alone and the various resin products described above are deteriorated by a reaction with oxygen in the air triggered by heat, ultraviolet rays, or the like, and are unbearable for long-term use. Therefore, in order to prevent deterioration of the resin due to light, particularly ultraviolet rays, or oxygen, an additive such as a light stabilizer, an ultraviolet absorber, or an antioxidant is added to the resin.

For example, PTL 1 proposes the addition of a phosphorus-based antioxidant to prevent yellowing of a composition containing a phenol resin. Further, PTL 2 proposes a novel phenol-based antioxidant for preventing oxidative deterioration of a resin, such as yellowing. Furthermore, PTL 3 proposes the addition of a hindered amine-based light stabilizer in order to improve the weather resistance of a polyurethane/acrylic resin composition. However, the phosphorus-based antioxidant is susceptible to hydrolysis, the phenol-based antioxidant itself may be oxidized to cause yellowing, and the hindered amine-based light stabilizer has a problem in that compatibility with resins is low and resins usable therefor are limited. Thus, the conventional antioxidants and light stabilizers have various problems. Therefore, antioxidants and light stabilizers in which these problems are solved have been desired.

On the other hand, PTL 4 proposes a resin composition containing a specific unsaturated double bond-containing compound having oxygen absorption performance.

### Citation List

### Patent Literature

PTL 1: JP 2005-263940 A
PTL 2: JP 2019-026737 A
PTL 3: JP H10-16169 A
PTL 4: WO 2019/107252 A

### Summary of Invention

### Technical Problem

It may be considered to prevent the deterioration of the resin due to oxygen by lowering the oxygen concentration in the resin composition using an unsaturated double bond-containing compound, as described in PTL 4, exhibiting oxygen absorption performance. However, in PTL 4, sufficient studies have not been made with respect to suppression of yellowing of a resin or a molded body produced using the resin composition, and there is still room for improvement.

An object of the present invention is to provide a composition and a resin composition exhibiting an excellent yellowing suppression effect, and a molded body containing them.

### Solution to Problem

As a result of intensive studies conducted to achieve the above object, the present inventors have found that a composition exhibiting an excellent yellowing suppression effect is obtainable by using a compound having a specific structure containing an unsaturated double bond in combination with at least one of a specific antioxidant and a light stabilizer, and have completed the present invention.

That is, the present invention provides the following [1] to [10].
[1] A composition containing a compound (A) containing a structure represented by the following general formula (I) as a first component, at least one of an antioxidant (B1) different from a phosphorus-based antioxidant and a light stabilizer (B2) as a second component, and a resin component (C) as a third component: 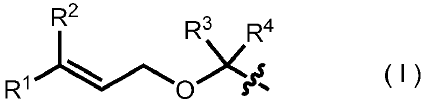 wherein R¹ and R² each independently represent an alkyl group having 1 to 6 carbon atoms, an alkenyl group having 2 to 6 carbon atoms, an aryl group, or an aralkyl group; and R³ and R⁴ each independently represent a hydrogen atom, an alkyl group having 1 to 6 carbon atoms, an alkenyl group having 2 to 6 carbon atoms, an aryl group, or an aralkyl group.
[2] The composition as set forth in [1], wherein R¹ and R² in the general formula (I) are each independently an alkyl group having 1 to 4 carbon atoms.
[3] The composition as set forth in [1], wherein the compound (A) is a compound containing a structure represented by the following general formula (II): 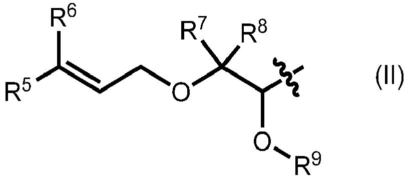 wherein R⁵ and R⁶ each independently represent an alkyl group having 1 to 6 carbon atoms, an alkenyl group having 2 to 6 carbon atoms, an aryl group, or an aralkyl group; R⁷ and R⁸ each independently represent a hydrogen atom, an alkyl group having 1 to 6 carbon atoms, an alkenyl group having 2 to 6 carbon atoms, an aryl group, or an aralkyl group; and R⁹ represents a hydrogen atom, a (meth)acryloyl group, an alkyl group having 1 to 6 carbon atoms, an alkenyl group having 2 to 6 carbon atoms, an aryl group, or an aralkyl group.
[4] The composition as set forth in any one of [1] to [3], wherein the composition contains an amine-based antioxidant as the second component.
[5] The composition as set forth in any one of [1] to [4], wherein the composition contains 0.1 to 5 parts by mass of the first component and 0.1 to 5 parts by mass of the second component with respect to 100 parts by mass of the resin component (C).
[6] The composition as set forth in any one of [1] to [5], wherein a mass ratio Ma/Mb between a mass Ma of the first component and a mass Mb of the second component is 0.1 to 20.
[7] The composition as set forth in any one of [1] to [6], wherein the resin component (C) is a resin component of a curable resin.
[8] The composition as set forth in [7], wherein the curable resin is at least one curable resin of a polyurethane resin and an epoxy resin.
[9] A resin composition obtained by curing the composition as set forth in [7] or [8].
[10] A molded body including the composition as set forth in any one of [1] to [8] or the resin composition as set forth in [9].

### Advantageous Effects of Invention

The present invention provides a composition, a resin composition, and a molded body thereof which exhibit an excellent yellowing suppression effect.

### Description of Embodiments

### [Composition]

The composition according to an embodiment of the present invention is a composition containing "a compound containing a structure represented by the following general formula (I)" (compound (A)) as a first component, at least one of "an antioxidant different from a phosphorus-based antioxidant" (antioxidant (B1)) and "a light stabilizer as a second component" (light stabilizer (B2)), and a resin component (C) as a third component: 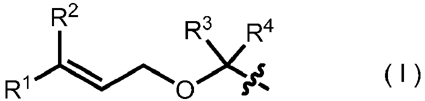 wherein R¹ and R² each independently represent an alkyl group having 1 to 6 carbon atoms, an alkenyl group having 2 to 6 carbon atoms, an aryl group, or an aralkyl group; and R³ and R⁴ each independently represent a hydrogen atom, an alkyl group having 1 to 6 carbon atoms, an alkenyl group having 2 to 6 carbon atoms, an aryl group, or an aralkyl group.

The composition exhibits an excellent yellowing suppression effect by using the specific compound (A) having an unsaturated double bond and at least one of the antioxidant (B1) different from a phosphorus-based antioxidant and the light stabilizer (B2) in combination. Although the reason is not limited to this, it is assumed as follows.

The yellowing of the resin is mainly caused by oxidation of the resin. The oxidation of the resin proceeds by a cycle of [i] a reaction in which alkyl radicals (R ·) generated by ultraviolet rays or the like react with oxygen to generate peroxide radicals (ROO·) (hereinafter referred to as a first reaction), and [ii] a reaction in which ROO · draws hydrogen from the resin skeleton and generates R · while itself becomes hydroperoxide (ROOH), and ROOH is further decomposed to generate new radicals, thereby accelerating the oxidation (hereinafter referred to as a second reaction). In general, antioxidants and light stabilizers exhibit an antioxidant effect by decomposing or quenching ROO · and ROOH, which are factors for the progress of the second reaction, but the antioxidants and the light stabilizers have a problem that the first reaction generating ROO · is unstoppable, and thus a certain amount of oxidation proceeds.

On the other hand, since the compound (A) has an oxygen absorption ability, addition of it to the resin component (C) reduces the generation itself of ROO · which is a factor of the resin oxidation cycle and suppresses the first reaction. Therefore, it is considered that by using the compound (A) in combination with the existing antioxidant or light stabilizer that suppresses the second reaction, both the first reaction and the second reaction are suppressed, and a more excellent yellowing suppression effect that cannot be achieved with the existing antioxidant or light stabilizer is exhibited.

### <First Component>

The compound (A) contained as the first component in the composition is a compound containing a structure represented by the general formula (I). As described above, the compound (A) has an oxygen absorption performance and suppresses a reaction between oxygen and an alkyl radical generated in a resin or a molded body due to ultraviolet rays or the like.

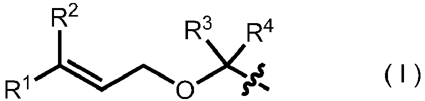

In the general formula (I), R¹ and R² each independently represent an alkyl group having 1 to 6 carbon atoms; an alkenyl group having 2 to 6 carbon atoms; an aryl group; or an aralkyl group.

Examples of the alkyl group having 1 to 6 carbon atoms represented by R¹ and R² include a methyl group, an ethyl group, a n-propyl group, an isopropyl group, a n-butyl group, an isobutyl group, a sec-butyl group, a tert-butyl group, a n-pentyl group, an isopentyl group, a neopentyl group, a n-hexyl group, a cyclopropyl group, a cyclobutyl group, a cyclopentyl group, and a cyclohexyl group.

Examples of the alkenyl group having 2 to 6 carbon atoms represented by R¹ and R² include a vinyl group, an allyl group, a propenyl group, an isopropenyl group, a butenyl group, an isobutenyl group, a pentenyl group, a prenyl group, a hexenyl group (such as a cis-3-hexenyl group), and a cyclohexenyl group.

Examples of the aryl group represented by R¹ and R² include a phenyl group, a tolyl group, a xylyl group, and a naphthyl group.

Examples of the aralkyl group represented by R¹ and R² include a benzyl group, a 2-phenylethyl group, a 2-naphthylethyl group, and a diphenylmethyl group.

Among these, R¹ and R² are each independently preferably an alkyl group having 1 to 6 carbon atoms or an alkenyl group having 2 to 6 carbon atoms, more preferably an alkyl group having 1 to 4 carbon atoms, and still more preferably a methyl group, from the viewpoint of more effectively suppressing yellowing of the resin or the molded body produced using the composition, and from the viewpoint of improving storage stability of the composition.

In the general formula (I), R³ and R⁴ each independently represent a hydrogen atom; an alkyl group having 1 to 6 carbon atoms; an alkenyl group having 2 to 6 carbon atoms; an aryl group; or an aralkyl group. Examples of the alkyl group having 1 to 6 carbon atoms; the alkenyl group having 2 to 6 carbon atoms; the aryl group; and the aralkyl group represented by R³ and R⁴ are the same as those for R¹ and R² described above, and redundant description is omitted.

Among these, R³ and R⁴ are each independently preferably a hydrogen atom; an alkyl group having 1 to 3 carbon atoms; an alkenyl group having 2 or 3 carbon atoms; or an aryl group, more preferably a hydrogen atom or a methyl group, and still more preferably a hydrogen atom. In particular, from the viewpoint of, for example, improving the oxygen absorption performance of the obtained polymer, it is preferable that both of R³ and R⁴ each are a hydrogen atom.

The compound (A) containing a structure represented by the general formula (I) is preferably a compound containing a structure represented by the following general formula (II) or a compound represented by any one of the following general formulae (III) to (V), and more preferably a compound represented by the following general formula (III) or the following general formula (V), from the viewpoint of more effectively suppressing yellowing of the resin or the molded body, and from the viewpoint of improving storage stability of the composition. 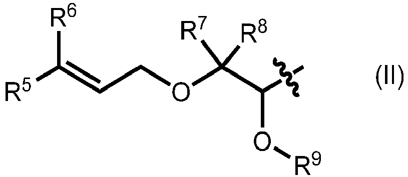 In the formula, R⁵ and R⁶ each independently represent an alkyl group having 1 to 6 carbon atoms, an alkenyl group having 2 to 6 carbon atoms, an aryl group, or an aralkyl group; R⁷ and R⁸ each independently represent a hydrogen atom, an alkyl group having 1 to 6 carbon atoms, an alkenyl group having 2 to 6 carbon atoms, an aryl group, or an aralkyl group; and R⁹ represents a hydrogen atom, a (meth)acryloyl group, an alkyl group having 1 to 6 carbon atoms, an alkenyl group having 2 to 6 carbon atoms, an aryl group, or an aralkyl group.

In the general formula (II), examples of R⁵, R⁶, R⁷, and R⁸ are the same as those for R¹, R², R³, and R⁴ in the general formula (I), respectively, and redundant description is omitted.

In the general formula (II), the (meth)acryloyl group represented by R⁹ represents an acryloyl group or a methacryloyl group.

In the general formula (II), examples of the alkyl group having 1 to 6 carbon atoms; the alkenyl group having 2 to 6 carbon atoms; the aryl group; and the aralkyl group represented by R⁹ are the same as those for R¹ in the general formula (I), and redundant description is omitted.

In the general formula (II), R⁹ is preferably an alkyl group having 1 to 6 carbon atoms or an alkenyl group having 2 to 6 carbon atoms, and more preferably a methyl group or a prenyl group.

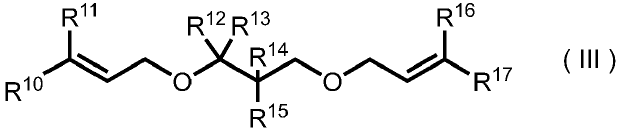

In the general formula (III), R¹⁰, R¹¹, R¹⁶, and R¹⁷ each independently represent an alkyl group having 1 to 6 carbon atoms; an alkenyl group having 2 to 6 carbon atoms; an aryl group; or an aralkyl group. R¹² and R¹³ each independently represent a hydrogen atom; an alkyl group having 1 to 6 carbon atoms; an alkenyl group having 2 to 6 carbon atoms; an aryl group; or an aralkyl group. R¹⁴ represents a hydrogen atom or a methyl group, and R¹⁵ represents a hydroxy group; a (meth)acryloyloxy group; a 4-vinylphenoxy group; or an alkenyloxy group having 2 to 6 carbon atoms.

In the general formula (III), examples of R¹⁰, R¹¹, R¹², and R¹³ are the same as those for R¹, R², R³, and R⁴ in the general formula (I), respectively, and redundant description is omitted.

In the general formula (III), R¹⁴ represents a hydrogen atom or a methyl group, and preferably a hydrogen atom. R¹⁵ represents a hydroxy group; a (meth)acryloyloxy group; a 4-vinylphenoxy group; or an alkenyloxy group having 2 to 6 carbon atoms, and is preferably a hydroxy group or a (meth)acryloyloxy group. Note that the alkenyloxy group having 2 to 6 carbon atoms may be a vinyloxy group having 2 to 6 carbon atoms.

In the general formula (III), examples of the (meth)acryloyloxy group represented by R¹⁵ include an acryloyloxy group and a methacryloyloxy group.

In the general formula (III), examples of the alkenyloxy group having 2 to 6 carbon atoms represented by R¹⁵ include a vinyloxy group, an allyloxy group, a 1-propenyloxy group, an isopropenyloxy group, a 1-butenyloxy group, a 2-butenyloxy group, a 3-butenyloxy group, a 2-methylallyloxy group, a 1-cyclobutenyloxy group, a 1-pentenyloxy group, a 2-methyl-2-butenyloxy group, a 1-cyclopentenyloxy group, a 1-hexenyloxy group, a 2-methyl-2-pentenyloxy group, and a 1-cyclohexenyloxy group.

In the general formula (III), R¹⁶ and R¹⁷ each independently represent an alkyl group having 1 to 6 carbon atoms; an alkenyl group having 2 to 6 carbon atoms; an aryl group; or an aralkyl group, and examples and preferable examples thereof are the same as those described in R¹ and R² in the general formula (I).

Among these, R¹⁶ and R¹⁷ are preferably each independently an alkyl group having 1 to 6 carbon atoms or an alkenyl group having 2 to 6 carbon atoms, more preferably an alkyl group having 1 to 4 carbon atoms, and still more preferably a methyl group.

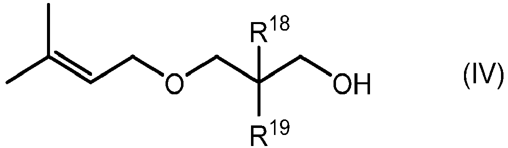

In the general formula (IV), R¹⁸ represents a hydrogen atom or a methyl group, and R¹⁹ represents a hydroxy group; a (meth)acryloyloxy group; a styryloxy group; or an alkenyloxy group having 2 to 5 carbon atoms.

In the general formula (IV), the (meth)acryloyloxy group and the alkenyloxy group having 2 to 5 carbon atoms represented by R¹⁹ are the same as those described in R¹⁵ in the general formula (III).

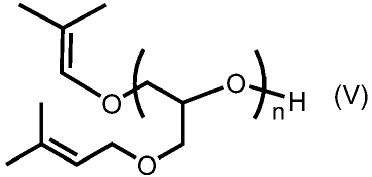

The compound represented by the general formula (V) has a weight average molecular weight (Mw) in terms of polystyrene of 200 to 50,000.

The method for producing the compound having a structure represented by the general formula (I), the compound having a structure represented by the general formula (II), the compound represented by the general formula (III), the compound represented by the general formula (IV), and the compound represented by the general formula (V) is not particularly limited, and they can be produced by applying known methods singly or in combination.

The content of the compound (A) in the composition is preferably 30 parts by mass or less, more preferably 10 parts by mass or less, still more preferably 5 parts by mass or less, and even more preferably 3 parts by mass or less with respect to 100 parts by mass of the resin component (C) from the viewpoint of facilitating expression of the characteristics derived from the resin component (C), and in order to obtain a sufficient yellowing suppression effect, the content of the compound (A) is preferably 0.1 parts by mass or more, more preferably 0.2 parts by mass or more, still more preferably 0.3 parts by mass or more, and even more preferably 0.5 parts by mass or more.

### <Second Component>

The composition contains, as the second component, at least one of "an antioxidant different from a phosphoric acid-based antioxidant" (antioxidant (B 1)) (hereinafter simply referred to as "antioxidant (B 1)" in some cases) and a light stabilizer (B2). The second component functions to quench peroxide radicals and hydroperoxides.

Examples of the antioxidant (B 1) different from the phosphoric acid-based antioxidant include a phenol-based antioxidant, a sulfur-based antioxidant, a hydroxylamine-based antioxidant, ascorbic acids, and nitrous acids. In particular, a phenol-based antioxidant is preferable from the viewpoint of more effectively suppressing yellowing of a resin or a molded body produced using the composition.

Examples of commercially available antioxidants include Irganox 1010, Irganox 1076, Irganox 1330, Irganox 3114, and Irganox 3125 (all manufactured by BASF), Adekastab AO-60 and Adekastab AO-80 (all manufactured by ADEKA CORPORATION), Sumilizer BHT, Sumilizer GA-80, Sumilizer GS, and Sumilizer GM (all manufactured by Sumitomo Chemical Company, Limited), DSTP "yoshitomi", DLTP "yoshitomi", and DMTP "yoshitomi" (all manufactured by Mitsubishi Chemical Corporation), SEENOX 412S (manufactured by Shipro Kasei Kaisha, Ltd.), and CYANOX 1212 (manufactured by Cyanamid Co.).

In general, it is said that yellowing of a resin occurs due to oxidation proceeding in a chain reaction from a peroxide radical generated by bonding of a carbon radical on the resin with oxygen. In the above composition, the compound (A) removes oxygen to suppress the generation of peroxide radicals, thereby suppressing yellowing of the resin to some extent. In addition, it is considered that the antioxidant (B1) or the light stabilizer (B2) quenches a peroxide radical generated from the oxygen which is not completely removed by the compound (A), thereby sufficiently suppressing yellowing of the resin. The phosphorus-based antioxidant has a function of quenching a hydroperoxide, which is a product of quenching of a peroxide radical, into a stable compound, but is poor in a function of quenching the peroxide radical itself. Therefore, when the phosphorus-based antioxidant is combined with the compound (A), a sufficient effect of suppressing yellowing cannot be obtained.

A phosphoric acid-based antioxidant may be contained together with the antioxidant (B1), but from the viewpoint of minimizing hydrolysis of the phosphoric acid-based antioxidant, the content thereof is preferably reduced. The content of the phosphoric acid-based antioxidant is preferably 0.5% by mass or less, more preferably 0.1% by mass or less, and still more preferably 0% by mass with respect to the mass of the entire composition.

Examples of the light stabilizer (B2) include an amine-based light stabilizer.

Examples of the amine-based light stabilizer include 1,6-bis(2,2,6,6-tetramethyl-4-piperidylamino)hexane/dibromoethane polycondensate, 1,6-bis(2,2,6,6-tetramethyl-4-piperidylamino)hexane/2,4-dichloro-6-morpholino-s-triazine polycondensate, 1,6-bis(2,2,6,6-tetramethyl-4-piperidylamino)hexane/2,4-dichloro-6-tert-octylamino-s-triazine polycondensate, 1,5,8,12-tetrakis[2,4-bis(N-butyl-N-(2,2,6,6-tetramethyl-4-piperidyl)amino)-s-triazine-6-yl]-1,5,8,12-tetraazadodecane, 1,5,8,12-tetrakis[2,4-bis(N-butyl-N-(1,2,2,6,6-pentamethyl-4-piperidyl)amino)-s-triazine-6-yl]-1,5,8,12-tetraazadodecane, 1,6,11-tris[2,4-bis(N-butyl-N-(2,2,6,6-tetramethyl-4-piperidyl)amino)-s-triazine-6-yl]aminoundecane, and 1,6,11-tris[2,4-bis(N-butyl-N-(1,2,2,6,6-pentamethyl-4-piperidyl)amino)-s-triazine - 6 -yl] aminoundecane.

Examples of the commercially available amine-based light stabilizers include Adekastab LA-52, Adekastab LA-63P, Adekastab LA-72, Adekastab LA-77G, and Adekastab LA-81 (manufactured by ADEKA CORPORATION), Tinuvin 249, TINUVIN 111 FDL, Tinuvin 123, Tinuvin 144, Tinuvin 292, and Tinuvin 5100 (manufactured by BASF), and KAMISTAB 29 (manufactured by Chemipro Kasei Kaisha, Ltd.).

The content of the second component in the composition is preferably 0.3 to 5 parts by mass, more preferably 0.3 to 3 parts by mass, and still more preferably 0.5 to 3 parts by mass with respect to 100 parts by mass of the resin component (C), from the viewpoint of more effectively suppressing yellowing.

In the composition, a mass ratio Ma/Mb between a mass Ma of the first component and a mass Mb of the second component is preferably 0.1 to 10, more preferably 0.3 to 5, and still more preferably 0.5 to 5, from the viewpoint of more effectively suppressing yellowing of a resin or a molded body produced using the composition.

### <Third Component>

As the resin component (C) contained in the composition as the third component, a resin component of a curable resin such as a thermosetting resin or an energy ray-curable resin, or a resin component of a thermoplastic resin may be used.

Examples of the resin component of the curable resin include a monomer, an oligomer, a prepolymer, and a mixture of two or more kinds thereof which constitute the curable resin, and further include a polymer thereof in addition to the components and the mixture.

Examples of the resin component of the thermoplastic resin include a thermoplastic resin itself, and a resin containing a thermoplastic resin as a main component and further containing a monomer, an oligomer, a prepolymer, or other components according to the intended use.

The resin component (C) is not particularly limited as long as it is a resin component constituting a resin used for a coating material, an adhesive, a coating agent, or the like, a resin component constituting a resin used for various molded articles such as a container, a housing, a protective member, and a tube, or a resin component constituting a resin used for a film, a fiber, or the like, and a resin component of a curable resin such as a thermosetting resin and an energy ray-curable resin, and a resin component of a thermoplastic resin can be used.

From the viewpoint that heating at a high temperature is not necessary for obtaining a resin or a molded body, a resin component of a curable resin is preferable as the resin component (C).

Examples of the curable resin include polyurethane resins, epoxy resins, phenol resins, urea resins, melamine resins, unsaturated polyesters, allyl resins, silicone resins, and furan resins. Among them, at least one of a polyurethane resin and an epoxy resin is preferable from the viewpoint of transparency, heat resistance, and the like.

The composition containing the resin component of the curable resin is cured by heating or irradiation with an active energy ray to form a resin composition, a resin, or a molded body.

As the polyurethane resin, a liquid curable compound (polyurethane curing liquid) containing a polyol component and a polyisocyanate component can be used.

As the polyol component, polyester polyol, polyether polyol, low molecular weight polyol, and the like can be used.

Examples of the polyester polyol include polyethylene adipate polyol, polybutylene adipate polyol, polyethylene butylene adipate polyol, polyhexamethylene isophthalate adipate polyol, polyethylene succinate polyol, polybutylene succinate polyol, polyethylene sebacate polyol, polybutylene sebacate polyol, poly-ε-caprolactone polyol, and poly(3-methyl-1,5-pentylene adipate) polyol.

Examples of the low molecular weight polyol include ethylene glycol, 1,3-propanediol, 2-methyl-1,3-propanediol, 2,2-dimethyl-1,3-propanediol, 2-butyl-2-ethyl-1,3-propanediol, 1,4-butanediol, 1,5-pentanediol, 3-methyl-1,5-pentanediol, 1,6-hexanediol, 1,9-nonanediol, diethylene glycol, triethylene glycol, 1,4-cyclohexanedimethanol, 1,3-cyclohexanedimethanol, 1,4-cyclohexanediol, 1,4-bis(hydroxyethyl)cyclohexane, and 2,7-norbornanediol.

The polyisocyanate component is a compound having at least two isocyanate groups in the molecule, and specific examples thereof include diisocyanates such as tolylene diisocyanate, 4,4'-diphenylmethane diisocyanate, hexamethylene diisocyanate, xylylene diisocyanate, naphthylene-1,5-diisocyanate, o-toluidine diisocyanate, and isophorone diisocyanate; products of these isocyanates and polyols; and tri- or higher-functional polyisocyanates produced by condensation of isocyanates.

As commercially available products of the polyisocyanate component, for example, those commercially available under the trade names of "Coronate HX", "Coronate HL-S", "Coronate L", "Coronate 2031", "Coronate 2030", "Coronate 2037", "Coronate 2234", "Coronate 2785", "Aquanate 200", and "Aquanate 210" manufactured by Tosoh Corporation, "Sumidur N3300", "Desmodur N3400", and "Sumidur N-75" manufactured by Sumika Covestro Urethane Co., Ltd., "Duranate E-405-80T", "Duranate 24A-100", and "Duranate TSE-100" manufactured by Asahi Kasei Chemicals Corporation, and "Takenate D-110N", "Takenate D-120N", "Takenate M-631N", and "MT-Olester NP1200" manufactured by Mitsui Chemicals, Inc. can be used.

As the epoxy resin, generally known epoxy resins having two or more glycidyl groups in one molecule can be used. Specific examples of the epoxy resin include bisphenol A epoxy resins, bisphenol E epoxy resins, bisphenol F epoxy resins, bisphenol S epoxy resins, phenol novolac epoxy resins, cresol novolac epoxy resins, xylene novolac epoxy resins, bisphenol A novolac epoxy resins, brominated bisphenol A epoxy resins, trifunctional phenol epoxy resins, naphthalene epoxy resins, phenol aralkyl epoxy resins, biphenyl aralkyl epoxy resins, naphthol aralkyl epoxy resins, alicyclic epoxy resins, dicyclopentadiene epoxy resins, and aralkyl novolac epoxy resins.

From the viewpoint of preventing the volatilization of the compound (A) and facilitating the preparation of the composition, the thermoplastic resin is preferably one that can be kneaded at a temperature of 200°C or lower.

Specific examples of the thermoplastic resin include polyethylene, polypropylene, polystyrene, AS resin, ABS resin, polyvinyl chloride, acrylic resin, methacrylic resin, polyvinylidene fluoride, nylon 12, acetal resin, and polycarbonate.

Among these, ABS resin, acrylic resin, and methacrylic resin are preferable from the viewpoint of effectively suppressing yellowing of the resin.

The content of the resin component (C) in the composition is preferably 70 to 99% by mass, more preferably 80 to 99% by mass, and still more preferably 90 to 99% by mass when the entire composition is taken as 100% by mass. When the content of the resin component (C) is equal to or greater than the lower limit value described above, the strength of a molded body obtained from the composition is easily improved. In addition, when the content of the resin component (C) in the composition is equal to or less than the upper limit value described above, the content of the compound (A) and the content of the antioxidant (B) are relatively increased, and thus it is easy to more effectively suppress yellowing of a molded body produced using the composition, and it is easy to improve the storage stability of the composition.

### <Other Components>

The composition may contain a component other than the first to third components as another component. For example, when the resin component (C) is a curable resin, the composition may contain a polymerization initiator.

The type of the polymerization initiator is not particularly limited and may be appropriately selected depending on the type of the curable resin to be used and the like. Specifically, a radical polymerization initiator is preferable. Examples of the radical polymerization initiator include a thermal radical polymerization initiator that generates radicals by heat, and a photoradical polymerization initiator that generates radicals by light.

Examples of the thermal radical polymerization initiator include organic peroxides such as diacyl peroxides such as benzoyl peroxide; peroxyesters such as t-butyl peroxybenzoate; hydroperoxides such as cumene hydroperoxide; dialkyl peroxides such as dicumyl peroxide; ketone peroxides such as methyl ethyl ketone peroxide and acetylacetone peroxide; peroxyketals; alkyl peresters; and percarbonates.

As the photoradical polymerization initiator, a commercially available product can be used. Examples thereof include Irgacure (registered trademark, hereinafter the same) 651, Irgacure 184, Irgacure 2959, Irgacure 127, Irgacure 907, Irgacure 369, Irgacure 379, Irgacure 819, Irgacure 784, Irgacure OXE01, Irgacure OXE02, and Irgacure 754 (all manufactured by BASF). One of these may be used alone, or two or more of these may be used in combination.

When a composition containing a radically polymerizable monomer and a curable resin is used for a coating application or the like, curing is usually performed in an air atmosphere, and thus the polymerization reaction is likely to be inhibited by oxygen in the air. However, since the composition contains the compound (A), there is an advantage that the polymerization reaction is hardly inhibited even in the air.

The content of the polymerization initiator in the composition is not particularly limited, but is preferably 0.001 parts by mass or more, more preferably 0.01 parts by mass or more, and still more preferably 0.1 parts by mass or more, and is preferably 10 parts by mass or less, and more preferably 5 parts by mass or less, with respect to 100 parts by mass of the composition because the effects of the present invention are more remarkably exhibited.

The composition may appropriately contain, as a component other than the first to third components, a diluent, a pigment, a dye, a filler, an ultraviolet absorber, a viscosity improver, a shrinkage reducing agent, an aging inhibitor, a plasticizer, an aggregate, a flame retardant, a stabilizer, a fiber reinforcement, a leveling agent, an anti-sagging agent, and the like. In addition, the composition may contain, for example, styrene, a (meth)acrylic acid ester or the like as a diluent, and from the viewpoint of polymerizability, it is particularly preferable that the composition contains a (meth)acrylic acid ester because the effects of the present invention are more remarkably exhibited.

Examples of the pigment include titanium oxide, red iron oxide, aniline black, carbon black, cyanine blue, and chromium yellow. Examples of the filler include talc, mica, kaolin, calcium carbonate, and clay.

### <Method for Producing Composition>

The composition is obtainable by mixing the compound (A), at least one of the antioxidant (B1) and the light stabilizer (B2), and the resin component (C). Specifically, a composition can be obtained by mixing the compound (A), the antioxidant (B1) and the light stabilizer (B2), the resin component (C), and an optional component as necessary by stirring or the like in air or an inert gas atmosphere.

When mixing the respective components, in a case where the resin component (C) is a liquid at room temperature such as a liquid curable resin, the composition can be prepared by stirring at a temperature of 20 to 60°C. In addition, in a case where the resin component (C) which is solid at room temperature such as a thermoplastic resin is used, the composition can be prepared by performing melt-kneading at a temperature of 100 to 300°C.

### <Use of Composition>

The composition is preferably used, for example, in applications of various molded articles such as coating materials, adhesives, coating agents, containers, housings, protective members and tubes, electronic material parts such as films, fibers, and semiconductor sealants, and the like. In particular, the above-described composition can be particularly preferably used for applications in which it is required to suppress a change in color tone such as a coating material or a coating agent, and applications in which translucency is required such as a container, a protective member, and a film, because the above-described composition exerts a yellowing suppression effect.

### [Resin Composition and Molded Body]

The resin composition according to the embodiment of the present invention is obtained by curing the composition. In addition, the molded body according to the embodiment of the present invention is obtained by molding the composition or the resin composition described above. When molding the composition, the molding may be performed while curing the resin component (C), or the composition prepared by melt-kneading may be melted and molded.

In the step of curing the resin component (C), the method is not particularly limited as long as the resin component (C) can be cured, and an appropriate method can be selected and used depending on the composition, the type of the polymerization initiator, and the like. For example, when the composition contains a thermal radical polymerization initiator, the composition may be cured by heating. When the composition contains a photoradical polymerization initiator, the composition may be cured by irradiation with an active energy ray such as UV

Moreover, when both are contained, heating may be carried out after irradiation with an active energy ray. A method of curing by irradiation with an active energy ray is preferable because the effects of the present invention are more remarkably exhibited depending on the intended use and the like.

When these radically polymerizable monomers are used for coating applications and the like, the polymerization reaction is likely to be inhibited by oxygen in the air because curing is usually performed in an air atmosphere, but inclusion of the compound (A) therein makes it easy to suppress the inhibition of the polymerization reaction.

### Examples

Hereinafter, the present invention will be described in detail with reference to Examples, but the present invention is not limited to these Examples.

Evaluation methods of the compositions obtained in Examples and Comparative Examples will be described below.

### <Change in YI value>

The YI value (yellowness index) of the molded body obtained in each of Examples and Comparative Examples was measured using a spectrophotometer (UV3600 manufactured by Shimadzu Corporation) in accordance with JIS K7373. Next, ultraviolet rays were irradiated for 72 hours under conditions of a black panel temperature of 60°C, a relative humidity of 50%, and an irradiation energy of 100 mW/cm² using a super UV tester (manufactured by IWASAKI ELECTRIC CO., LTD.: SUV-w161), and the YI value was measured again by the same procedure. Then, the difference between the YI values before and after the ultraviolet irradiation was calculated and defined as the change in the YI value (ΔYI). A smaller ΔYI indicates that yellowing is less likely to occur.

Raw materials and compounds used in Examples and Comparative Examples are as follows.

### <Resin Component (C)>

A urethane curing liquid containing the following components:
· Isocyanate compound: Coronate 2037 (manufactured by Tosoh Corporation)
·1,4-butanediol (BDO) (manufactured by FUJIFILM Wako Pure Chemical Corporation)
·Poly(3-methyl-1,5-pentylene adipate) polyol: P-2010 (manufactured by Kuraray Co., Ltd.)

### <Compound (A)>

·Compound (A-1): 1,3-bis(3-methyl-2-butenoxy)-2-hydroxypropane
·Compound (A-2): α-(3-methyl-2-butenoxy)-ω-hydroxypoly[oxy(3-methyl-2-butenoxymethylethane-1,2-diyl)]

### <Antioxidant (B 1)>

· Hindered phenol-based antioxidant: Irganox 1010 (manufactured by BASF)

### <Light Stabilizer (B2)>

·Amine-based light stabilizer: Adekastab LA-52 (manufactured by ADEKA CORPORATION)

### <Phosphorus-Based Antioxidant>

·Adekastab PEP-36 (manufactured by ADEKA CORPORATION)

The compounds (A-1) and (A-2) were synthesized by the following methods.

### [Production Example 1] (Production of Compound (A-1))

A reaction vessel equipped with a stirrer, a thermometer, and a dropping funnel was charged with 61.8 g (0.717 mol) of 3-methyl-2-buten-1-ol and 36.84 g (0.657 mol) of potassium hydroxide under a nitrogen gas stream. While maintaining the internal temperature at 10°C or lower, 19.34 g (0.209 mol) of epichlorohydrin was added dropwise with stirring, and after completion of the dropwise addition, the temperature was raised to 50°C. The mixture was stirred at an internal temperature of 50°C for 6 hours and then cooled to 25°C. The mixture was neutralized with 4M hydrochloride aqueous solution, and the upper layer was washed with 310 mL of ion-exchanged water. The obtained organic layer was purified by distillation to obtain 1,3-bis(3-methyl-2-butenoxy)-2-hydroxypropane 28.77 g (0.126 mol; yield: 60.3%) represented by the following formula (A-1).

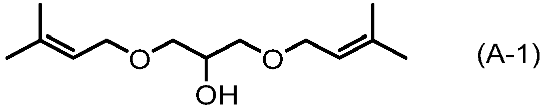

### [Production Example 2] (Production of Compound (A-2))

A reaction vessel equipped with a stirrer, a thermometer, and a dropping funnel was charged with 1654 g (19.2 mol) of 3-methyl-2-buten-1-ol, 1842 g (23.0 mol) of 50% sodium hydroxide aqueous solution, and 28 g (0.084 mol) of dodecyl benzyl dimethyl ammonium chloride under a nitrogen gas stream. While maintaining the internal temperature at 60°C or lower, 1776 g (19.2 mol) of epichlorohydrin was added dropwise with stirring, and after completion of the dropwise addition, the temperature was raised to 90°C. The mixture was stirred at an internal temperature of 90°C for 9 hours and then cooled to 25°C. The mixture was washed with 5000 g of 7.5% sodium hydrogen carbonate aqueous solution, and the upper layer was washed with 5000 mL of ion-exchanged water. Water and unreacted 3-methyl-2-buten-1-ol were removed from the obtained organic layer by distillation to obtain 1996 g (yield: 73%) of α-(3-methyL2-buttenoxy)-ω-hydroxypoly[oxy(3-methyl-2-buttenoxymethylethane-1,2-diyl)] represented by the general formula (A-2). GPC measurement revealed that the obtained compound had a number average molecular weight of 300 and a weight average molecular weight of 360 (in terms of polystyrene).

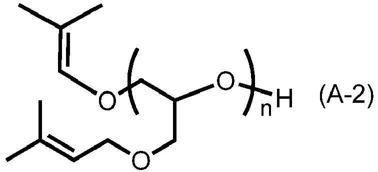

### <Examples 1 to 3 and Comparative Examples 1 to 6>

Compositions were prepared by mixing each component at room temperature according to the blend proportions shown in Table 1. Then, each of the obtained compositions was injected into a molding die made of SUS304 having a quadrangular shape of 50 mm wide × 50 mm deep × 1 mm thick, and was heated under the conditions of a temperature of 70°C and an atmospheric pressure to mold each of the compositions while curing the composition, thereby producing a molded body. Table 1 shows the evaluation results of the molded body obtained from each of the compositions.

### [Table 1]

**Table 1**

| Component and Evaluation item | | | | Ex. 1 | Ex. 2 | Ex. 3 | Comp. Ex. 1 | Comp. Ex. 2 | Comp. Ex. 3 | Comp. Ex. 4 | Comp. Ex. 5 | Comp. Ex. 6 |
|---|---|---|---|---|---|---|---|---|---|---|---|---|
| Component amount [part by mass] | Resin component (C) | Urethane curing liquid | Coronate 2037 | 59.1 | 59.1 | 59.1 | 59.1 | 59.1 | 59.6 | 59.1 | 59.1 | 59.1 |
| | | | BDO | 3.4 | 3.4 | 3.4 | 3.4 | 3.4 | 3.3 | 3.4 | 3.4 | 3.4 |
| | | | P2010 | 37.5 | 37.5 | 37.5 | 37.5 | 37.5 | 36.2 | 37.5 | 37.5 | 37.5 |
| | Compound (A) | (A-1) | | 0.5 | 0.5 | - | 0.5 | - | 1.0 | - | - | - |
| | | (A-2) | | - | - | 0.5 | - | - | - | 1.0 | - | - |
| | Antioxidant (B 1) | Adekastab LA-52 | | 0.5 | - | 0.5 | - | - | - | - | - | 1.0 |
| | Light stabilizer (B2) | Irganox 1010 | | - | 0.5 | - | - | - | - | - | 1.0 | - |
| | Phosphorus-based antioxidant | Adekastab PEP-36 | | - | - | - | 0.5 | - | - | - | - | - |
| Evaluation | ΔYI | | | 14.9 | 11.4 | 14.9 | 15.7 | 21.1 | 15.5 | 15.1 | 17.5 | 20.5 |

As is clear from the results shown in Table 1, the molded body produced using the composition of Example 1 in which the compound (A) having a structure represented by the general formula (I) and the antioxidant (B1) or the light stabilizer (B2) are used in combination shows a smaller change in YI value and less yellowing than the molded bodies produced using the compositions of Comparative Examples 2, 5, and 6 which do not contain the compound (A).

Further, as is clear from the comparison between Examples 1 and 2 and Comparative Example 3 and the comparison between Example 3 and Comparative Example 4, it is found that the combined use of the compound (A) and the antioxidant (B 1) or the light stabilizer (B2) can further reduce the change in the YI value of the molded body as compared with the composition produced using only the compound (A).

Furthermore, as is clear from the comparison between Examples 1 and 2 and Comparative Example 1, it is found that the change in the YI value can be made smaller in a molded body produced using a composition in which an antioxidant different from a phosphorus-based antioxidant or a light stabilizer is used in combination with the compound (A) than in a molded body produced using a composition in which the compound (A) is used in combination with a phosphorus-based antioxidant.

## Claims

1. A composition comprising a compound (A) comprising a structure represented by the following general formula (I) as a first component, at least one of an antioxidant (B1) different from a phosphorus-based antioxidant and a light stabilizer (B2) as a second component, and a resin component (C) as a third component: 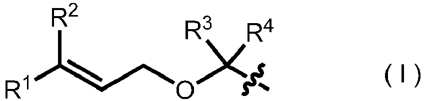 wherein R¹ and R² each independently represent an alkyl group having 1 to 6 carbon atoms, an alkenyl group having 2 to 6 carbon atoms, an aryl group, or an aralkyl group; and R³ and R⁴ each independently represent a hydrogen atom, an alkyl group having 1 to 6 carbon atoms, an alkenyl group having 2 to 6 carbon atoms, an aryl group, or an aralkyl group.

2. The composition according to claim 1, wherein R¹ and R² in the general formula (I) are each independently an alkyl group having 1 to 4 carbon atoms.

3. The composition according to claim 1, wherein the compound (A) is a compound containing a structure represented by the following general formula (II): 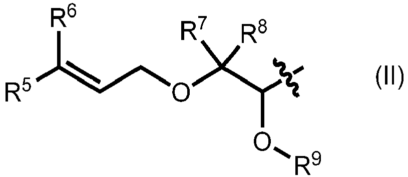 wherein R⁵ and R⁶ each independently represent an alkyl group having 1 to 6 carbon atoms, an alkenyl group having 2 to 6 carbon atoms, an aryl group, or an aralkyl group; R⁷ and R⁸ each independently represent a hydrogen atom, an alkyl group having 1 to 6 carbon atoms, an alkenyl group having 2 to 6 carbon atoms, an aryl group, or an aralkyl group; and R⁹ represents a hydrogen atom, a (meth)acryloyl group, an alkyl group having 1 to 6 carbon atoms, an alkenyl group having 2 to 6 carbon atoms, an aryl group, or an aralkyl group.

4. The composition according to any one of claims 1 to 3, wherein the composition contains an amine-based antioxidant as the second component.

5. The composition according to any one of claims 1 to 4, wherein the composition contains 0.1 to 5 parts by mass of the first component and 0.1 to 5 parts by mass of the second component with respect to 100 parts by mass of the resin component (C).

6. The composition according to any one of claims 1 to 5, wherein a mass ratio Ma/Mb between a mass Ma of the first component and a mass Mb of the second component is 0.1 to 20.

7. The composition according to any one of claims 1 to 6, wherein the resin component (C) is a resin component of a curable resin.

8. The composition according to claim 7, wherein the curable resin is at least one curable resin of a polyurethane resin and an epoxy resin.

9. A resin composition obtained by curing the composition according to claim 7 or 8.

10. A molded body comprising the composition according to any one of claims 1 to 8 or the resin composition according to claim 9.
